(19) **Europäisches Patentamt / European Patent Office / Office européen des brevets**

(11) **EP 4 402 094 B1**

(12) **EUROPEAN PATENT SPECIFICATION**

(45) Date of publication and mention
of the grant of the patent:
**03.12.2025 Bulletin 2025/49**

(21) Application number: **22789884.8**

(22) Date of filing: **16.09.2022**

(51) International Patent Classification (IPC):
**C01B 11/04** *(2006.01)*     **C01B 11/02** *(2006.01)*
**A01N 59/00** *(2006.01)*     **A01P 1/00** *(2006.01)*

(52) Cooperative Patent Classification (CPC):
**C01B 11/04; A01N 59/00; A01P 1/00; C01B 11/023**

(86) International application number:
**PCT/EP2022/075802**

(87) International publication number:
**WO 2023/041725 (23.03.2023 Gazette 2023/12)**

(54) **CHEMICAL COMPOSITION, METHOD FOR MANUFACTURING HYPOCHLOROUS ACID FOR OBTAINING SAID CHEMICAL COMPOSITION AND INSTALLATION TO PERFORM SAID METHOD**

CHEMISCHE ZUSAMMENSETZUNG, VERFAHREN ZUR HERSTELLUNG VON HYPOCHLORIGER SÄURE ZUR HERSTELLUNG DIESER CHEMISCHEN ZUSAMMENSETZUNG UND ANLAGE ZUR DURCHFÜHRUNG DES VERFAHRENS

COMPOSITION CHIMIQUE, PROCÉDÉ DE FABRICATION D'ACIDE HYPOCHLOREUX POUR L'OBTENTION LADITE COMPOSITION CHIMIQUE ET INSTALLATION POUR EFFECTUER LEDIT PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.09.2021 EP 21382841**

(43) Date of publication of application:
**24.07.2024 Bulletin 2024/30**

(73) Proprietor: **Ignasi Clotet, S.L.U.**
**25230 Mollerusa Lleida (ES)**

(72) Inventors:
• **CLOS PIJUÁN, Juan**
**25320 MOLLERUSSA - Lleida (ES)**
• **CABA MUNTADA, Joan**
**25230 MOLLERUSSA - LLeida (ES)**

(74) Representative: **Curell Suñol S.L.P.**
**Muntaner 240, 4º 2ª**
**08021 Barcelona (ES)**

(56) References cited:
JP-A- H11 116 205     US-A- 4 143 115
US-A- 4 744 956     US-A- 5 165 910
US-A- 6 103 950     US-A1- 2010 135 894
US-A1- 2011 052 480

**Description**

Field of the invention

The invention relates to a chemical composition, a method for manufacturing hypochlorous acid for obtaining said chemical composition and an installation to perform said method.

State of the art

Chemical compositions comprising active chlorine can be used as biocides, for example, in the treatment of water. This is a very dynamic field, as microorganisms are constantly evolving, hence, biocides are also constantly being improved.

It is known that active chlorine can be formed in aqueous solution by the electrolysis of sodium chloride. As the sodium chloride used has impurities or contaminants such as metals, the solution obtained will not be very pure. This will affect the quality of the biocide. US 5 165 910 A discloses solutions comprising for example from 80 to 100 ppm ClO2 and 10,30 ppm HClO with a pH from 4.6 to 5.

Summary of the invention

An object of the present invention is a method for the manufacturing of hypochlorous acid, starting from sodium hypochlorite or potassic hypochlorite of synthesis. These hypochlorites usually include some amounts of chlorites and chlorates, and the method according to the invention includes some reactions that allow the transformation of these chlorites and chlorates, obtaining, as a beneficial by-product, a certain amount of chlorine dioxide. Therefore, the chemical composition obtained from the method according to the invention also includes a certain amount of chlorine dioxide (always less than hypochlorous acid). Other impurities, such as carbonates (particularly $Na_2CO_3$) are also broken down, and in addition, as the starting materials include less sodium chloride, fewer impurities or contaminants such as metals commonly present in sodium chloride are also avoided and the total chloride content in the composition is low. Therefore, the composition obtained with the present invention is much more pure.

So, it is another object of the invention to provide a chemical composition that enhances biocide properties. This purpose is achieved by a chemical composition of the type indicated at the beginning, characterized in that it is an aqueous solution comprising a concentration of hypochlorous acid of from 0.00005 to 0.6 % w/w, a concentration of chlorine dioxide of from 0.00001 to 0.5 % w/w and a pH comprised between 4.5 and 7.5, where a ratio of $ClO_2$ with respect to HClO is comprised between 0.05:1 and 0.5:1 in w/w. as from claim 1.

The main advantage of this biocidal product is that it contains 2 disinfectant biocides: HClO (as the main component) and $ClO_2$ within the same chemical solution. Therefore, the product has better disinfectant properties due to the action of the two biocides simultaneously and to the correct proportions in which they are manufactured. In addition, impurities such as chlorites, chlorates and carbonates (present in the reagents for manufacture of the composition) are very low or non existent.

In the present description and claims, the expression "total chlorine" refers to the total free chlorine found as HClO and $ClO^-$.

The invention further includes a number of preferred features that are object of the dependent claims and the utility of which will be highlighted hereinafter in the detailed description of an embodiment of the invention.

Preferably, said pH is comprised between 5 and 7.5, more preferably said pH is comprised between 5.2 and 6.7, and even more preferably it is comprised between 5.3 and 6.2. Within this pH ranges, an optimal concentration of HClO, $ClO^-$ and $ClO_2$ is obtained. Moreover, these pH ranges ensure that the chemical composition is stable.

Preferably, said concentration of hypochlorous acid is in the range of from 0.002 to 0.4 % w/w, and said concentration of chlorine dioxide is in the range of from 0.0002 to 0.3 % w/w. More preferably, said concentration of hypochlorous acid is in the range of from 0.01 to 0.2 % w/w, and said concentration of chlorine dioxide is in the range of from 0.001 to 0.03 % w/w.

Preferably said chemical composition further comprises a concentration of sodium chloride (NaCl) of less than 1.5 % w/w and, more preferably less than 1 % w/w. As NaCl is not more added to the chemical composition, the chemical composition presents less impurities and metals. This allows to differentiate this chemical composition from the ones placed in the market, as the ones placed in the market are formed using NaCl and, therefore, have a higher content of NaCl, impurities and metals. In particular, if decalcified and osmotized water (preferably having a conductivity of less than 60 μS/cm) is used in the manufacturing of the composition, then the resulting composition can have a concentration of sodium chloride of less than 1 % w/w. Alternatively, preferably said chemical composition presents a ratio of NaCl with respect of HClO that is below 4:1 in w/w, more preferably below 3:1 in w/w.

Preferably, said chemical composition presents a ratio of carbonate ion with respect of HClO that is below 0.06:1 in w/w, more preferably below 0.01:1 in w/w and, most preferably below 0.006:1 in w/w. The reduction of the content of carbonate ion improves the stability of the composition.

Chemical composition presents a ratio of chlorite ion with respect of HClO that is below 0.01:1 in w/w, more preferably below 0.006:1 in w/w and, most preferably below 0.002:1 in w/w.

Chemical composition presents a ratio of chlorate ion with respect of HClO that is below 0.02:1 in w/w, more preferably below 0.015:1 in w/w and, most preferably below 0.01:1 in w/w.

Preferably, said chemical composition presents a ratio of $ClO_2$ with respect to HClO comprised between 0.1:1 and 0.2:1 in w/w. More preferably, said ratio is comprised between 0.11:1 and 0.16:1 in w/w. These are the ranges that have been found to be optimal for the chemical composition to act as a double biocide.

Preferably, said chemical composition presents a conductivity, k, expressed in $\mu S/cm$, according to the following formula $k = (4.75 \times C) \pm 100\%$, wherein C is the concentration of HClO and $ClO^-$, expressed in ppm, expressed in ppm. More preferably, said conductivity, k, is $k = (4.75 \times C) \pm 50\%$. The conductivity of the chemical composition can be used as a parameter to compare and differentiate this chemical composition from other chemical compositions placed in the market. This is possible because the conductivity is closely related to the concentration of the chemical compounds found in the chemical composition.

It is another object of the invention to provide a manufacturing method to manufacture hypochlorous acid for obtaining said chemical composition. This purpose is achieved by a manufacturing method of the type indicated at the beginning, in an installation that comprises a first reactor (RNK), a basic reactor (RBK) and an acid reactor (RAK), characterized in that it comprises the following steps:

    i. Adjusting a total chlorine control unit to a desired total chlorine set point,
    ii. Adjusting a pH control unit to a desired pH set point,
    iii. Adding water to said first reactor,
    iv. Mixing, in said basic reactor, a basic composition with an aqueous solution coming from the first reactor to form a first basic solution, said basic composition being an aqueous solution comprising:

        a. a sodium or potassium chlorate and/or a sodium or potassium chlorite,
        and
        b. a salt selected from the group formed by sodium hypochlorite or potassic hypochlorite,

    v. Mixing, in said acid reactor, an acid composition with said aqueous solution coming from the first reactor to form a first acid solution, said acid composition being an aqueous solution comprising an acid compound selected from the group formed by hydrochloric acid and $H_2SO_4$,
    vi. Mixing said first basic solution with said first acid solution to obtain a mixed solution,
    vii. Discharging said mixed solution to said first reactor and mixing said mixed solution with said aqueous solution of said first reactor,
    viii. Measuring the pH level of the aqueous solution of said first reactor, and controlling an addition of a second basic composition and/or of said acid composition of said step v based on said measuring of the pH level and on said pH set point of step ii,
    ix. Measuring the total chlorine, and controlling an addition of said basic composition in said step iv based on said measuring of total chlorine and on said total chlorine set point of step,
    x. Measuring the oxidation-reduction potential in said first reactor,
    xi. Measuring the concentration of $ClO_2$ found in said aqueous solution of said first reactor.

This manufacturing method ensures that the manufacturing process is carried out under a controlled environment.

Reactions that take place:

a) Basic reactions:

$$NaClO + H_2O \rightarrow NaOH + HClO \Leftrightarrow Na^+ + OH^- + OCl^- \text{ (depending on the pH value)}$$

b) Acid reactions:

Transformation of hypochlorite to hypochlorous acid:
$NaClO + 2\,HCl \rightarrow Cl_2 + NaCl + H_2O$ (pH < 4,5), gaseous $Cl_2$ is surrounded by water and will undergo the following reaction: $Cl_2 + H_2O \rightarrow ClOH + Cl^- + H^+$

Elimination of carbonates:

$Na_2CO_3 + HCl \rightarrow NaHCO_3 + NaCl ----> NaHCO_3 + HCl \rightarrow NaCl + CO_2 + H_2O$ (pH < 3,7 (Carbonates are being degraded, with pH <2 they are completely eliminated)

Transformation of chlorites into chlorine dioxide:

$2NaClO_2 + NaOCl + 2HCl = 2ClO_2 + 3NaCl + H_2O$ (pH 2-5) $4ClO_2^- + 2H^+ \rightarrow Cl^- + 2ClO_2 + ClO_3^- + H_2O$ (pH<2)

Transformation of chlorates into chlorine dioxide:

$2NaClO_3 + 4HCl \rightarrow 2ClO_2 + Cl_2 + 2NaCl + 2H_2O$ (pH <1, additionally $Cl_2 + H_20 \rightarrow ClOH + Cl^- + H^+$)

As can be seen, the objective of the method is to manufacture hypochlorous acid and the starting reactants are hypochlorite (sodium or potassic hypochlorite) and a strong acid (hydrochloric acid or $H_2SO_4$). The chlorites and chlorates are not added on purpose, but they are inevitable impurities in industrial grade hypochlorites produced by the degradation of hypochlorite itself (for example, according to Spanish norm UNE-EN 901). An advantage of the present method is that these impurities are eliminated, and another advantage is that chlorine dioxide is obtained as a beneficious by-product.

The total chlorine control unit allows to fix a total chlorine set point that is well below a limit in which gaseous $Cl_2$ could be generated (at about 5000 ppm). It is possible to work with basic compositions whose exact composition is not known (relative content of hypochlorite/chlorite/chlorate) as chlorites and chlorates are transformed into chlorine dioxide.

Preferably, the basic composition of step iv comprises a least 1 % w/w of hypochlorite ion, preferably at least 5 % w/w of hypochlorite ion and, more preferably at least 10 % w/w of hypochlorite ion.

Preferably, in the basic composition of step iv the combined concentration of sodium or potassium chlorate and/or sodium or potassium chlorite is less than 18% w/w, preferably less than 10% and, more preferably less than 5 % w/w.

Preferably, in the basic composition of step iv the concentration of sodium carbonate is less than 2 % w/w.

Preferably, said installation further comprises a refrigeration unit, where said aqueous solution of said first reactor is refrigerated and sent back to the first reactor. This way, it is possible to control the temperature at which the manufacturing process is performed.

More preferably, said refrigerated aqueous solution is sent back to said first reactor at least partially through said basic reactor. Therefore, the aqueous solution entering the basic reactor is at a desired temperature, allowing the reaction to happen in a controlled environment.

Even more preferably, said refrigerated aqueous solution is sent back to said first reactor at least partially through said acid reactor. Therefore, the aqueous solution entering the acid reactor is at a desired temperature, allowing the reaction to happen in a controlled environment.

In a further preferred solution, the measuring of the total chlorine of step ix is done in the refrigerated aqueous solution.

Preferably, said salt of said basic composition is sodium hypochlorite.

Preferably, said acid compound of said acid composition is hydrochloric acid, as hydrochloric acid is easier to manipulate..

Preferably, said water is pre-treated water with less than 60 $\mu$S/cm. This allows to reduce the consumption of acid.

Preferably, the method comprises adjusting a second pH control unit to a desired second pH set point, measuring the pH level of the mixed solution of step vi, and controlling an addition of the acid composition of step v based on the measuring of the pH level of the mixed solution and on the second pH set point.

Preferably, said method is performed at a temperature comprised between 5 and 35 °C. More preferably, said method is performed at a temperature comprised between 15 and 23 °C. This temperature range has been found to be the optimal one to perform the manufacturing method, as the chemical composition will degrade slower and will be more stable.

It is another object of the invention to provide an installation to perform the manufacturing method for manufacturing said chemical compound. This purpose is achieved by an installation of the type indicated at the beginning, characterized in that it comprises:

- A basic compound deposit,
- An acid compound deposit,
- A first reactor with a water inlet,

- An acid reactor with an acid inlet, an acid reactor aqueous solution inlet and an acid reactor outlet, said aqueous solution inlet being in fluid communication with said first reactor and said acid inlet being in fluid communication with said acid compound deposit, said outlet being in fluid communication with said first reactor,
- A basic reactor with a basic inlet, a basic reactor aqueous solution inlet and a basic reactor outlet, said basic reactor aqueous solution inlet being in fluid communication with said first reactor and said basic inlet being in fluid communication with said basic compound deposit, said basic reactor outlet being in fluid communication, downstream of said two inlets of said acid reactor, with said acid reactor,
- A basic pump able to pump a basic solution from said basic compound deposit to said basic reactor,
- a total chlorine control unit connected to said basic pump and able to govern said basic pump,
- An acid pump able to pump an acid solution from said acid compound deposit to said acid reactor,
- a pH control unit connected to said acid pump and able to govern said acid pump.

The installation described allows the chemical composition to be manufactured in a controlled environment.

Preferably, said installation further comprises a refrigeration unit with one refrigeration unit inlet in fluid communication with said first reactor and one refrigeration unit outlet in fluid communication with said acid reactor aqueous solution inlet and with said basic reactor aqueous solution inlet. Therefore, this creates a closed loop system to refrigerate the aqueous solution.

Preferably, said installation further comprises a temperature sensor. More preferably, said temperature sensor is connected to said refrigeration unit. When the temperature sensor detects a temperature above or below a threshold value, the refrigeration unit acts accordingly to adjust the temperature of the aqueous solution to the desired value.

Preferably, said installation further comprises a water treatment unit to treat the water with which the manufacturing process will be carried out. Ideally, as previously said, the water will be treated to have less than 60 $\mu$S/cm.

Preferably, said acid reactor and said basic reactor are at least partially placed within said first reactor. Therefore, said acid reactor and basic reactor are surrounded by the same temperature.

Preferably, said installation further comprises an oxidation-reduction potential sensor to detect whether the chemical reactions take place under the desired oxidation level.

Preferably, said installation further comprises a chlorine gas sensor to detect if chlorine gas is being released.

Preferably, said installation further comprises a fan unit in fluid communication with said chlorine gas sensor and with an active carbon filter. Therefore, it can air the first reactor towards the chlorine gas sensor.

More preferably, said installation further comprises a water shower in connection with said chlorine gas sensor. So, when a chlorine gas value above a set threshold is detected, the water shower is activated.

Preferably, said installation further comprises a stirring element arranged within said first reactor. This ensure the aqueous solution to be mixed.

Preferably, said installation further comprises a flow meter and conductivity sensor to control the amount of water being administered to the first tank and that said water has the desired quality.

Preferably, said installation further comprises a first level probe to detect whether the aqueous solution within said first reactor exceeds a threshold value and a second level probe to detect the minimum amount of water needed to start performing the chemical reaction.

Likewise, the invention also includes other features of detail illustrated in the detailed description of an embodiment of the invention and in the accompanying figures.

Brief description of the drawings

Further advantages and features of the invention will become apparent from the following description, in which, without any limiting character, preferred embodiments of the invention are disclosed, with reference to the accompanying drawings in which:

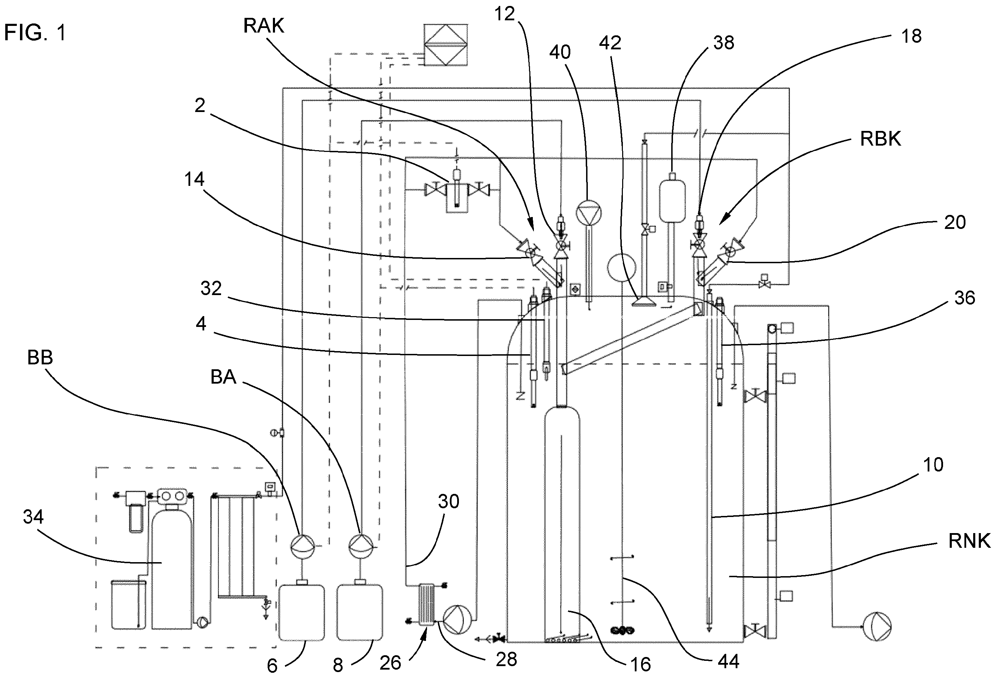

Figure 1 is a schematic representation of an installation according to a first embodiment of the invention.

Detailed description of embodiments of the invention

An installation according to a first embodiment of the invention can be seen in Figure 1. This installation comprises:

- three reactors which are: a first reactor RNK, an acid reactor RAK and a basic reactor RBK. As seen in Figure 1, both the acid reactor RAK and the basic reactor RBK are partially placed within the first reactor RNK. Within the first reactor RNK there is also arranged stirring element 44,
- a water treatment unit 34, capable of treating water and delivering treated water with less than 60 $\mu$S/cm to the first reactor RNK. Even though treated water with less than 60 $\mu$S/cm is preferred, non-treated water (or water with a higher conductivity, for example simply decalcified water) could also be delivered to the first neutral reactor RNK,

- a basic compound deposit 6 that contains a basic composition that is an aqueous solution that comprises a salt, which is sodium hypochlorite, and a sodium chlorate. A basic pump BB is able to pump the basic composition from the basic compound deposit 6 to the basic reactor RBK under the instructions of a total chlorine control unit 2, which is connected to the basic pump BB and is able to govern the basic pump BB,
- an acid compound deposit 8 that contains a first acid composition that is an aqueous solution that comprises hydrochloric acid. An acid pump BA is able to pump the acid composition from the acid compound deposit 8 to the acid reactor RAK under the instructions of a pH control unit 4, which is connected to the acid pump BA and is able to govern the acid pump BA, and
- a refrigeration unit 26, with one refrigeration unit inlet 28 in fluid communication with said first reactor RNK and one refrigeration unit outlet 30 in fluid communication with said acid reactor RAK and with said basic reactor RBK.

In one hand, the acid reactor RAK comprises:

- an acid inlet 12, which is in fluid communication with the acid compound deposit 8,
- an acid reactor aqueous solution inlet 14, which is in fluid communication with the first reactor RNK. The refrigeration unit 26 is arranged between, and in fluid communication with, the acid reactor aqueous solution inlet 14 and the first reactor RNK,
- an acid reactor outlet 16, which is in fluid communication with the first reactor RNK.

In the other hand, the basic reactor RBK comprises:

- a basic inlet 18, which is in fluid communication with the basic compound deposit 6,
- a basic reactor aqueous solution inlet 20, which is in fluid communication with the first reactor RNK. The refrigeration unit 26 is arranged between, and in fluid communication with, the basic reactor aqueous solution inlet 20 and the first reactor (RNK),
- a basic reactor outlet 22, which is in fluid communication, downstream of said two inlets 12, 14 of said acid reactor RAK, with said acid reactor RAK.

In order to control the parameters of the chemical reaction and make sure that the chemical reaction takes place under optimal and safe conditions, the installation also comprises:

- a temperature sensor 32 connected to the refrigeration unit 26,
- an oxidation-reduction potential sensor 36,
- a chlorine gas sensor 38 in fluid communication with a fan unit 40 and with an active carbon filter,
- a water shower 42 in connection with the chlorine gas sensor 38, so when chlorine gas is detected the water shower is activated for safety reasons,
- a first level probe to detect whether the aqueous solution within said first reactor exceeds a threshold value. If so, the manufacturing process is stopped,
- a second level probe to detect the minimum amount of water needed to start performing the chemical reaction, and
- a flow meter and conductivity sensor to control the amount of water being administered to the first tank and that said water has the desired quality.

As explained in this first embodiment, the acid compound of the acid composition is hydrochloric acid. However, the acid compound could also be $H_2SO_4$. And the basic composition is an aqueous solution that comprises a salt, which is sodium hypochlorite, and a sodium chlorate. Nevertheless, the salt could also be potassium hypochlorite, and the sodium chlorate could be replaced by any of the following: potassium chlorate, potassium chlorite or sodium chlorite.

In this first embodiment, the manufacturing process starts treating water in the water treatment unit 34. When the conductivity sensor detects that the water has less than 60 $\mu$S/cm, the water is delivered to the first reactor RNK. The amount of water delivered can be adjusted according to the flow meter parameters. The first reactor RNK is filled up to a minimum level. When the second level probe detects that this minimum level has been reach, the chemical reaction can start.

Water contained in the first reactor RNK is then sent to the refrigeration unit 26, so its temperature can be adjusted to around 23 °C. After that, the water is sent to both the acid reactor RAK and the basic reactor RBK, forming therefore a closed loop refrigeration system. As it will be explained hereinafter, it is only at the very first step of the manufacturing process that the first reactor only contains treated water, since when chemical reactions take place, this treated water is mixed with chemical compounds and will, therefore, turn out to be an aqueous solution with chemical compounds. Indeed, the final chemical composition will be contained in the first reactor RNK.

Two chemical reactions take place at the same time: one in the acid reactor RAK and another in the basic reactor RBK.

In one hand the refrigerated water enters the acid reactor RAK through the acid reactor aqueous solution inlet 14. In parallel, the acid pump BA pumps hydrochloric acid from the acid compound deposit 8 to the acid inlet 12 of the acid reactor RAK. This hydrochloric acid is then mixed in the acid reactor RAK with the refrigerated water, so as to form a first acid solution.

In the other hand, the refrigerated water also enters the basic reactor RBK through the basic reactor aqueous solution inlet 20. In parallel, the basic pump BB pumps a basic composition, which is an aqueous solution that comprises sodium hypochlorite and sodium chlorate, from the basic compound deposit 6 to the basic inlet 18 of the basic reactor RBK. This basic composition is then mixed in the basic reactor RBK with the refrigerated water, so as to form a first basic solution. Once the first basic solution has been formed, it is sent to the acid reactor RAK, downstream of the acid reactor inlets 12, 14 so it can be mixed with the first acid solution. Therefore, a mixed solution is obtained. Then, this mixed solution is discharged to the first reactor RNK and is mixed with the treated water that was initially delivered to the first reactor RNK. When the treated water and the mixed solution are mixed, an aqueous solution is obtained. This aqueous solution will then be delivered again to the refrigeration unit 26. In fact, it is a continuous process, so the chemical composition of this aqueous solution is constantly changing until the desired chemical composition is achieved.

As previously explained, the pH control unit 4 regulates the pH of the aqueous solution contained in the first reactor RNK by governing the acid pump BA. This is, the pH of the aqueous solution will be adjusted by adding more or less hydrochloric acid.

Similarly, the total chlorine control unit 2 regulates the total chlorine of the aqueous solution contained in the first reactor RNK by governing the basic pump BB. This is, the total chlorine found in the aqueous solution is adjusted by adding more or less basic composition.

It is worth mentioning that by performing the manufacturing process just described, a chemical composition comprising HClO and $ClO_2$ is obtained. This is important because nowadays, HClO and $ClO_2$ are manufactured following different manufacturing processes and using different compounds.

The following table shows the chemical composition of a chemical composition obtained by the manufacturing process previously explained:

| | | | | pH AND TOTAL CHLORINE CONDITIONS | | | |
|---|---|---|---|---|---|---|---|
| | | | | pH 5,5 (total chlorine 1 g/l) | pH 6,0 (total chlorine 1 g/l) | pH 5,5 (total chlorine 0,5 g/l) | pH 6,00 (total chlorine 0,5 g/l) |
| CHEMICAL COMPOUND | FORMULA | CAS-N.° | EINECS-N° | % (w/w) | % (w/w) | % (w/w) | % (w/w) |
| Water | H2O | 7732-18-5 | 231-791-2 | 99,76% | 99,76% | 99,88% | 99,88% |
| Hypochlorus acid (active chlorine) | HClO | 7790-92-3 | 232-232-5 | 0,09977% | 0,09954% | 0,04989% | 0,04977% |
| Hypochorite ion (inactive chlorine) | ClO⁻ | 14380-61-1 | | 0,00023% | 0,00046% | 0,00012% | 0,00023% |
| Sodium chloride | NaCl | 7647-14-5 | 231-598-3 | 0,2062% | 0,2062% | 0,1031% | 0,1031% |
| Chloride di-oxide | $ClO_2$ | 10049-04-4 | 233-162-8 | 0,0125% | 0,01250% | 0,0063% | 0,0063% |

As previously mentioned, total chlorine, in this case refers to chlorine free found in the form of HClO and ClO⁻.

The following table shows the conductivity of different chemical compositions, with different HClO contents, obtained through the manufacturing method previously explained, for a pH of 5,5:

| Conductivity μS/cm | 376 | 792 | 2800 | 13560 | 22600 |
|---|---|---|---|---|---|
| HClO (ppm) | 100 | 213 | 740 | 3700 | 6000 |

(continued)

| Conductivity $\mu$S/cm | 376 | 792 | 2800 | 13560 | 22600 |
|---|---|---|---|---|---|
| ClO$_2$ (ppm) | 15 | 32 | 111 | 555 | 924 |

**EXAMPLE:**

A water treatment installation for drinking water of a small city, used sodium hypochlorite as a source of active Cl. The incoming water was quite acidic (pH 5.8) and the use of sodium hypochlorite had the additional advantage of moving the pH to 6. But, as it is usually the case, the sodium hypochlorite did contain certain amounts of chlorate, and the treated water had an excess of chlorates: when adding 2 ppm of sodium hypochlorite in the incoming water (in order to have less than 1 ppm of active Cl in the treated water) the treated water had also over 0.25 ppm of chlorates (limit value fixed by the European Directive (UE) 2020/2184 of the European Parliament and of the Council of 16 December 2020 on the quality of water intended for human consumption).

Using the new method and an installation according to the invention, the hypochlorite is transformed into high quality hypochlorous acid, with a small amount of chloride dioxide and without chlorites and chlorates.

The method is done in an installation according to the invention. The first reactor RNK has a capacity of 500 L and has an acid reactor RAK and a basic reactor RBK in its interior. The basic reactor outlet 22 is in fluid communication with the acid reactor RAK, downstream of the inlets 12, 14 of the acid reactor RAK. And the acid reactor outlet 16 is in fluid communication with the first reactor RNK. The whole installation is controlled by a control means that receives the signals of the sensors (total chlorine, pHs, oxidation-reduction potential, flows, etc.) and adjusts the pumps according to these signals. In fact, this control means incudes the control tasks of the total chlorine control unit 2, the pH control unit 4 and other control units that may be present in the installation. A total chlorine set point of, for example, 500 ppm, and a pH set point of 7.5 are introduced. The control means control the addition of the basic composition (i.e., the sodium hypochlorite) so that the amount of hypochlorous acid reaches the established set point. Additionally, the control means controls the addition of a second basic composition (which, in general, preferably is diluted NaOH) until the pH set point is reached. In the present example the incoming water is quite acidic and, therefore, it is necessary to add a certain amount of the second basic composition. In other cases, it may be necessary to add more acid (instead of the second basic composition) in order to reach the pH set point. In this latter scenario, the control means will allow that a greater quantity of the acid composition is added.

The first step is to fill the first reactor with 400 L of decalcified, osmotized water that, in the present case, is slightly acidic (pH 5.8). The basic composition is concentrated sodium hypochlorite (11% w/w, pH > 12) and in the basic reactor RBK the basic composition is diluted with the recirculating water from the first reactor and the basic reaction takes place. The acid composition is hydrochloric acid (33% w/w, pH < 1) and in the acid reactor RAK the acid composition is diluted with the recirculating water from the first reactor. The first basic solution and the first acid solution are mixed in the acid reactor RAK forming the so-called mixed solution. In this point it is convenient that the pH is very acidic (preferably < 1). Therefore, in general, a preferred embodiment of the invention includes a second pH control unit that controls the pH of the mixed solution. In these acidic conditions the chlorates (and chlorites) are eliminated almost entirely. The gaseous Cl$_2$ is hydrolysed obtaining hypochlorous acid.

The installation comprises a refrigeration unit and the refrigerated aqueous solution had a temperature of 15°C.

With the method and installation of the present invention, in order to get 402 L of composition with 500 ppm of hypochlorous acid at a pH of 5.5 it is necessary 1.48 L of hypochlorite (11% w/w) and about 0.5 L of hydrochloric acid (33% w/w). The quantity of chlorine dioxide present in the composition will depend on the quantity of chlorates (and chlorites) present in the basic composition. In the present example, the composition had 98 ppm pf chlorine dioxide, the chlorites were totally eliminated and the chlorates were mainly eliminated. Additionally, 60 ppm of sodium carbonate present in the basic composition were also eliminated.

The manufacturing ratio was 1 ppm HClO: 0.2 ppm ClO2, without chlorites or chlorates, ideal to be dosed without having problems with the formation of trihalomethanes or other unwanted compounds and to have a high disinfecting power for all the following organisms: Yeasts, fungi, viruses, bacteriophages, spores, algae, bacteria, encapsulated bacteria that are difficult to eliminate (type legionella) and biofilm elimination.

## Claims

1.    - Chemical composition **characterized in that** it is an aqueous solution comprising a concentration of hypochlorous acid of from 0.00005 to 0.6 % w/w, a concentration of chlorine dioxide of from 0.00001 to 0.5 % w/w and a pH comprised between 4.5 and 7.5, where a ratio of ClO$_2$ with respect to HClO is comprised between 0.05:1 and 0.5:1 in w/w, and **in**

**that** a ratio of chlorite ion with respect of HClO is below 0.01:1 in w/w and a ratio of chlorate ion with respect of HClO is below 0.02:1 in w/w.

2. - Chemical composition according to claim 1, **characterised in that** said concentration of hypochlorous acid is in the range of from 0.002 to 0.4 % w/w, and said concentration of chlorine dioxide is in the range of from 0.0002 to 0.3 % w/w, and, preferably, said concentration of hypochlorous acid is in the range of from 0.01 to 0.2 % w/w, and said concentration of chlorine dioxide is in the range of from 0.001 to 0.03 % w/w.

3. - Chemical composition according to any one of claims 1 or 2, **characterized in that** a ratio of NaCl with respect of HClO is below 4:1 in w/w, more preferably below 3:1 in w/w.

4. - Chemical composition according to any one of claims 1 to 3, **characterised in that** a ratio of carbonate ion with respect of HClO is below 0.06:1 in w/w, preferably below 0.01:1 in w/w and, more preferably below 0.006:1 in w/w.

5. - Chemical composition according to any one of claims 1 to 4, **characterised in that** it presents a conductivity, k, expressed in $\mu$S/cm, according to the following formula:

$$k = (4.75 \ x \ C) \pm 100\%$$

wherein C is the concentration of HClO and $ClO^-$, expressed in ppm and, preferably said conductivity, k, is:

$$k = (4.75 \ x \ C) \pm 50\%$$

6. - Method for manufacturing hypochlorous acid for obtaining a chemical composition according to any one of claims 1 to 5, in an installation that comprises a first reactor (RNK), a basic reactor (RBK) and an acid reactor (RAK), **characterised in that** it comprises the following steps:

   i. Adjusting a total chlorine control unit (2) to a desired total chlorine set point,
   ii. Adjusting a pH control unit (4) to a desired pH set point,
   iii. Adding water to said first reactor (RNK),
   iv. Mixing, in said basic reactor (RBK), a basic composition with an aqueous solution coming from the first reactor (RNK) to form a first basic solution, said basic composition being an aqueous solution comprising:

      a. a sodium or potassium chlorate and/or a sodium or potassium chlorite, and
      b. a salt selected from the group formed by sodium hypochlorite or potassic hypochlorite,

   v. Mixing, in said acid reactor (RAK), an acid composition with said aqueous solution coming from the first reactor (RNK) to form a first acid solution, said acid composition being an aqueous solution comprising an acid compound selected from the group formed by hydrochloric acid and $H_2SO_4$,
   vi. Mixing said first basic solution with said first acid solution to obtain a mixed solution,
   vii. Discharging said mixed solution to said first reactor (RNK) and mixing said mixed solution with said aqueous solution of said first reactor (RNK),
   viii. Measuring the pH level of the aqueous solution of said first reactor (RNK), and controlling an addition of a second basic composition and/or of said acid composition of said step v based on said measuring of the pH level and on said pH set point of step ii,
   ix. Measuring the total chlorine, and controlling an addition of said basic composition in said step iv based on said measuring of total chlorine and on said total chlorine set point of step i,
   x. Measuring the oxidation-reduction potential in said first reactor (RNK),
   xi. Measuring the concentration of $ClO_2$ found in said aqueous solution of said first reactor (RNK).

7. - Method according to claim 6, **characterised in that** said installation further comprises a refrigeration unit, where said aqueous solution of said first reactor (RNK) is refrigerated forming a refrigerated aqueous solution and said refrigerated aqueous solution is sent back to the first reactor (RNK) and, preferably, said refrigerated aqueous solution is sent back to said first reactor (RNK) at least partially through said basic reactor (RBK) and/or at least partially through said acid reactor (RAK).

8. - Method according to claim 7, **characterised in that** the measuring of the total chlorine of step ix is done in said refrigerated aqueous solution.

9. - Method according to any one of claims 6 to 8, **characterised in that** it comprises adjusting a second pH control unit to a desired second pH set point, measuring the pH level of the mixed solution of said step vi, and controlling an addition of said acid composition of said step v based on said measuring of the pH level of the mixed solution and on said second pH set point.

10. - Method according to any one of the claims 6 to 9, **characterised in that** said method is performed at a temperature comprised between 5 and 35 °C and, preferably at a temperature comprised between 15 and 23 °C.

11. - Installation to perform the method according to any one of claims 6 to 10, **characterised in that** it comprises:

   - A basic compound deposit (6)
   - An acid compound deposit (8)
   - A first reactor (RNK) with a water inlet (10),
   - An acid reactor (RAK) with an acid inlet (12), an acid reactor aqueous solution inlet (14) and an acid reactor outlet (16), said aqueous solution inlet (14) being in fluid communication with said first reactor (RNK) and said acid inlet (12) being in fluid communication with said acid compound deposit (8), said outlet (16) being in fluid communication with said first reactor (RNK),
   - A basic reactor (RBK) with a basic inlet (18), a basic reactor aqueous solution inlet (20) and a basic reactor outlet (22), said basic reactor aqueous solution inlet (20) being in fluid communication with said first reactor (RNK) and said basic inlet (18) being in fluid communication with said basic compound deposit (6), said basic reactor outlet (22) being in fluid communication, downstream of said two inlets (12, 14) of said acid reactor (RAK), with said acid reactor (RAK),
   - A basic pump (BB) able to pump a basic solution from said basic compound deposit (6) to said basic reactor (RBK),
   - a total chlorine control unit (2) connected to said basic pump (BB) and able to govern said basic pump (BB),
   - An acid pump (BA) able to pump an acid solution from said acid compound deposit (8) to said acid reactor (RAK),
   - a pH control unit (4) connected to said acid pump (BA) and able to govern said acid pump (BA).

12. - Installation according to claim 11, **characterised in that** it further comprises a refrigeration unit (26) with one refrigeration unit inlet (28) in fluid communication with said first reactor (RNK) and one refrigeration unit outlet (30) in fluid communication with said acid reactor aqueous solution inlet (14) and with said basic reactor aqueous solution inlet (20) and, preferably, said installation further comprises a temperature sensor (32) connected to said refrigeration unit (26).

13. - Installation according to any one of the claims 11 or 12, **characterised in that** said acid reactor (RAK) and said basic reactor (RBK) are at least partially placed within said first reactor (RNK).

14. - Installation according to any one of claims 11 to 13, **characterised in that** it further comprises an oxidation-reduction potential sensor (36).

15. - Installation according to any one of claims 11 to 14, **characterised in that** it further comprises a chlorine gas sensor (38) and, preferably it further comprises: [a] a fan unit (40) in fluid communication with said chlorine gas sensor (38) and with an active carbon filter and/or [b] a water shower (42) in connection with said chlorine gas sensor (38).

**Patentansprüche**

1. Chemische Zusammensetzung, **dadurch gekennzeichnet, dass** es sich um eine wässrige Lösung handelt, welche eine Konzentration an Hypochlorsäure von 0,00005 bis 0,6 Gew.-%, eine Konzentration von 0,00001 bis 0,5 Gew.-% Chlordioxid und einen pH-Wert zwischen 4,5 und 7,5 umfasst, wobei ein Verhältnis von $ClO_2$ zu HClO zwischen 0,05:1 und 0,5:1 (Gew./Gew.) liegt, und dass ein Verhältnis von Chlorit-Ion zu HClO unter 0,01:1 (Gew./Gew.) liegt und ein Verhältnis von Chlorat-Ion zu HClO unter 0,02:1 (Gew./Gew.) liegt.

2. Chemische Zusammensetzung gemäß Anspruch 1, **dadurch gekennzeichnet, dass** die Konzentration von Hypochlorsäure im Bereich von 0,002 bis 0,4 Gew.-% liegt und die Konzentration von Chlordioxid im Bereich von 0,0002 bis 0,3 Gew.-% liegt, und vorzugsweise die Konzentration von Hypochlorsäure im Bereich von 0,01 bis 0,2 Gew.-% liegt und die Konzentration von Chlordioxid im Bereich von 0,001 bis 0,03 Gew.-% liegt.

3. Chemische Zusammensetzung gemäß einem der Ansprüche 1 oder 2, **dadurch gekennzeichnet, dass** ein Verhältnis von NaCl zu HClO unter 4:1 (Gew./Gew.), mehr bevorzugt unter 3:1 (Gew./Gew.) liegt.

4. Chemische Zusammensetzung gemäß einem der Ansprüche 1 bis 3, **dadurch gekennzeichnet, dass** ein Verhältnis von Carbonation zu HClO unter 0,06:1 (Gew./Gew.), vorzugsweise unter 0,01:1 (Gew.-/Gew.) und mehr bevorzugt unter 0,006:1 (Gew./Gew.) liegt.

5. Chemische Zusammensetzung gemäß einem der Ansprüche 1 bis 4, **dadurch gekennzeichnet, dass** diese eine Leitfähigkeit k, ausgedrückt in $\mu$S/cm, gemäß der folgenden Formel zeigt:

$$k = (4{,}75 \times C) \pm 100\%$$

wobei C die Konzentration von HClO und ClO$^-$, ausgedrückt in ppm, ist und vorzugsweise die Leitfähigkeit k

$$k = (4{,}75 \times C) \pm 50\% \text{ ist.}$$

6. Verfahren zur Herstellung von Hypochlorsäure zum Erhalten einer chemischen Zusammensetzung gemäß einem der Ansprüche 1 bis 5 in einer Anlage, welche einen ersten Reaktor (RNK), einen basischen Reaktor (RBK) und einen sauren Reaktor (RAK) umfasst, **dadurch gekennzeichnet, dass** das Verfahren die folgenden Schritte umfasst:

   i. Einstellen einer Gesamtchlor-Steuereinheit (2) auf einen gewünschten Gesamtchlor-Sollwert,
   ii. Einstellen einer pH-Steuereinheit (4) auf einen gewünschten pH-Sollwert,
   iii. Zugabe von Wasser zu dem ersten Reaktor (RNK),
   iv. Mischen einer basischen Zusammensetzung mit einer wässrigen Lösung, welche aus dem ersten Reaktor (RNK) stammt, in dem basischen Reaktor (RBK), um eine erste basische Lösung zu bilden, wobei die basische Zusammensetzung eine wässrige Lösung ist, umfassend:

   a. ein Natrium- oder Kaliumchlorat und/oder ein Natrium- oder Kaliumchlorit, und
   b. ein Salz, ausgewählt aus der Gruppe gebildet aus Natriumhypochlorit oder Kaliumhypochlorit,

   v. Mischen einer sauren Zusammensetzung mit der wässrigen Lösung, welche aus dem ersten Reaktor (RNK) stammt, in dem sauren Reaktor (RAK), um eine erste saure Lösung zu bilden, wobei die saure Zusammensetzung eine wässrige Lösung umfassend eine saure Verbindung, ausgewählt aus der Gruppe gebildet aus Hypochlorsäure und H$_2$SO$_4$, ist,
   vi. Mischen der ersten basischen Lösung mit der ersten sauren Lösung, um eine gemischte Lösung zu erhalten,
   vii. Abgeben der gemischten Lösung in den ersten Reaktor (RNK) und Mischen der gemischten Lösung mit der wässrigen Lösung des ersten Reaktors (RNK),
   viii. Messen des pH-Wertes der wässrigen Lösung des ersten Reaktors (RNK) und Steuern einer Zugabe einer zweiten basischen Zusammensetzung und/oder der sauren Zusammensetzung aus Schritt v, basierend auf der Messung des pH-Wertes und auf dem pH-Sollwert aus Schritt ii,
   ix. Messen des Gesamtchlorgehalts und Steuern einer Zugabe der basischen Zusammensetzung aus Schritt iv, basierend auf der Messung des Gesamtchlorgehalts und dem Gesamtchlorgehalt-Sollwert aus Schritt i,
   x. Messen des Oxidations-Reduktionspotentials in dem ersten Reaktor (RNK),
   xi. Messen der Konzentration von ClO$_2$ in der wässrigen Lösung des ersten Reaktors (RNK).

7. Verfahren gemäß Anspruch 6, **dadurch gekennzeichnet, dass** die Anlage ferner ein Kühlaggregat umfasst, in welchem die wässrige Lösung des ersten Reaktors (RNK) gekühlt wird, um eine gekühlte wässrige Lösung zu bilden und die gekühlte wässrige Lösung in den ersten Reaktor (RNK) zurückgeführt wird und vorzugsweise die gekühlte wässrige Lösung mindestens teilweise durch den basischen Reaktor (RBK) und/oder mindestens teilweise durch den sauren Reaktor (RAK) in den ersten Reaktor (RNK) zurückgeführt wird.

8. Verfahren gemäß Anspruch 7, **dadurch gekennzeichnet, dass** das Messen des Gesamtchlorgehalts aus Schritt ix in der gekühlten wässrigen Lösung durchgeführt wird.

9. Verfahren gemäß einem der Ansprüche 6 bis 8, **dadurch gekennzeichnet, dass** dieses das Einstellen einer zweiten pH-Steuereinheit auf einen gewünschten zweiten pH-Sollwert, Messen des pH-Werts der gemischten Lösung aus Schritt vi und Steuern einer Zugabe der sauren Zusammensetzung aus Schritt v, basierend auf der Messung des pH-Werts der gemischten Lösung und auf dem zweiten pH-Sollwert, umfasst.

10. Verfahren gemäß einem der Ansprüche 6 bis 9, **dadurch gekennzeichnet, dass** das Verfahren bei einer Temperatur zwischen 5 und 35°C und vorzugweise bei einer Temperatur zwischen 15 und 23°C durchgeführt wird.

11. Anlage zur Durchführung des Verfahrens gemäß einem der Ansprüche 6 bis 10, **dadurch gekennzeichnet, dass** diese umfasst:

   - ein Depot für die basische Verbindung (6)
   - ein Depot für die saure Verbindung (8)
   - einen ersten Reaktor (RNK) mit einem Wassereinlass (10),
   - einen sauren Reaktor (RAK) mit einem Säureeinlass (12), einem Einlass für die wässrige Lösung des sauren Reaktors (14) und einen Säurereaktorauslass (16), wobei der Einlass für die wässrige Lösung (14) in Fluidverbindung mit dem ersten Reaktor (RNK) steht und der Säureeinlass (12) in Fluidverbindung mit dem Depot für die saure Verbindung (8) steht, wobei der Auslass (16) in Fluidverbindung mit dem ersten Reaktor (RNK) steht,
   - einen basischen Reaktor (RBK) mit einem Baseneinlass (18), einem Einlass für die wässrige Lösung des basischen Reaktors (20) und einen Auslass im basischen Reaktor (22), wobei der Einlass für die wässrige Lösung des basischen Reaktors (20) in Fluidverbindung mit dem ersten Reaktor (RNK) steht und der Baseneinlass (18) in Fluidverbindung mit dem Depot für die basische Verbindung (6) steht, wobei der Auslass im basischen Reaktor (22) stromabwärts von den zwei Einlässen (12, 14) des sauren Reaktors (RAK) in Fluidverbindung mit dem sauren Reaktor (RAK) steht,
   - eine Basenpumpe (BB), welche eine basische Lösung aus dem Depot für die basische Verbindung (6) zum basischen Reaktor (RBK) pumpen kann,
   - eine Gesamtchlor-Steuereinheit (2), welche mit der Basenpumpe (BB) verbunden ist und welche die Basenpumpe (BB) regeln kann,
   - eine Säurepumpe (BA), welche eine saure Lösung aus dem Depot für die saure Verbindung (8) zum sauren Reaktor (RAK) pumpen kann,
   - eine pH-Steuereinheit (4), welche mit der Säurepumpe (BA) verbunden ist und die Säurepumpe (BA) regeln kann.

12. Anlage gemäß Anspruch 11, **dadurch gekennzeichnet, dass** diese ferner ein Kühlaggregat (26) mit einem Kühlaggregats-Einlass (28) in Fluidverbindung mit dem ersten Reaktor (RNK) und einen Kühlaggregats-Auslass (30) in Fluidverbindung mit dem Einlass für die wässrige Lösung des sauren Reaktors (14) und mit dem Einlass für die wässrige Lösung des basischen Reaktors (20) umfasst, und vorzugsweise die Anlage ferner einen Temperatursensor (32) umfasst, welcher mit dem Kühlaggregat (26) verbunden ist.

13. Anlage gemäß einem der Ansprüche 11 oder 12, **dadurch gekennzeichnet, dass** der saure Reaktor (RAK) und der basische Reaktor (RBK) mindestens teilweise innerhalb des ersten Reaktors (RNK) angeordnet sind.

14. Anlage gemäß einem der Ansprüche 11 bis 13, **dadurch gekennzeichnet, dass** diese ferner einen Oxidations-Reduktionspotential-Sensor (36) umfasst.

15. Anlage gemäß einem der Ansprüche 11 bis 14, **dadurch gekennzeichnet, dass** diese ferner einen Chlorgas-Sensor (38) umfasst und diese vorzugsweise ferner umfasst: [a] eine Gebläse-Einheit (40) in Fluidverbindung mit dem Chlorgas-Sensor (38) und mit einem Aktivkohlefilter und/oder [b] eine Wasserdusche (42) in Verbindung mit dem Chlorgas-Sensor (38).

**Revendications**

1. Composition chimique **caractérisée en ce qu'**elle est une solution aqueuse comprenant une concentration en acide hypochloreux de 0,00005 à 0,6 % p/p, une concentration en dioxyde de chlore de 0,00001 à 0,5 % p/p et un pH compris entre 4,5 et 7,5, où un rapport de $ClO_2$ par rapport à HClO est compris entre 0,05:1 et 0,5:1 en p/p, et **en ce qu'**un rapport d'ion chlorite par rapport à HClO est inférieur à 0,01:1 en p/p et un rapport d'ion chlorate par rapport à HClO est inférieur à 0,02:1 en p/p.

**2.** Composition chimique selon la revendication 1, **caractérisée en ce que** ladite concentration en acide hypochloreux est comprise dans la plage allant de 0,002 à 0,4 % p/p, et ladite concentration en dioxyde de chlore est comprise dans la plage allant de 0,0002 à 0,3 % p/p, et, de préférence, ladite concentration en acide hypochloreux est comprise dans la plage allant de 0,01 à 0,2 % p/p, et ladite concentration en dioxyde de chlore est comprise dans la plage allant de 0,001 à 0,03 % p/p.

**3.** Composition chimique selon l'une quelconque des revendications 1 ou 2, **caractérisée en ce qu'**un rapport NaCl par rapport à HClO est inférieur à 4:1 en p/p, plus préférablement inférieur à 3:1 en p/p.

**4.** Composition chimique selon l'une quelconque des revendications 1 à 3, **caractérisée en ce qu'**un rapport d'ion carbonate par rapport à HClO est inférieur à 0,06:1 en p/p, de préférence inférieur à 0,01:1 en p/p, et plus préférablement inférieur à 0,006:1 en p/p.

**5.** Composition chimique selon l'une quelconque des revendications 1 à 4, **caractérisée en ce qu'**elle présente une conductivité, k, exprimée en $\mu$S/cm, selon la formule suivante :

$$k = (4{,}75 \times C) \pm 100\ \%,$$

dans laquelle C est la concentration en HClO et ClO⁻, exprimée en ppm et, de préférence ladite conductivité, k, est :

$$k = (4{,}75 \times C) \pm 50\ \%.$$

**6.** Procédé de fabrication d'acide hypochloreux pour l'obtention d'une composition chimique selon l'une quelconque des revendications 1 à 5, dans une installation comprenant un premier réacteur (RNK), un réacteur basique (RBK) et un réacteur acide (RAK),
**caractérisé en ce qu'**il comprend les étapes suivantes :

   i. réglage d'une unité de régulation de chlore total (2) à une valeur de consigne de chlore total souhaitée ;
   ii. réglage d'une unité de régulation de pH (4) à une valeur de consigne de pH souhaitée ;
   iii. ajout d'eau audit premier réacteur (RNK) ;
   iv. mélange, dans ledit réacteur basique (RBK), d'une composition basique avec une solution aqueuse provenant du premier réacteur (RNK) pour former une première solution basique, ladite composition basique étant une solution aqueuse comprenant :

      a. un chlorate de sodium ou de potassium et/ou un chlorite de sodium ou de potassium, et
      b. un sel choisi dans le groupe formé par l'hypochlorite de sodium ou l'hypochlorite de potassium,

   v. mélange, dans ledit réacteur acide (RAK), d'une composition acide avec ladite solution aqueuse provenant du premier réacteur (RNK) pour former une première solution acide, ladite composition acide étant une solution aqueuse comprenant un composé acide choisi dans le groupe formé par l'acide chlorhydrique et l'$H_2SO_4$,
   vi. mélange de ladite première solution basique avec ladite première solution acide pour obtenir une solution mixte,
   vii. déversement de ladite solution mixte dans ledit premier réacteur (RNK) et mélange de ladite solution mixte avec ladite solution aqueuse dudit premier réacteur (RNK),
   viii. mesure du niveau de pH de la solution aqueuse dudit premier réacteur (RNK) et régulation d'un ajout d'une deuxième composition basique et/ou de ladite composition acide de ladite étape v en fonction de ladite mesure du pH et de ladite valeur de consigne de pH de l'étape ii,
   ix. mesure du chlore total et régulation d'un ajout de ladite composition basique de ladite étape iv en fonction de ladite mesure de chlore total et de ladite valeur de consigne de chlore total de l'étape i,
   x. mesure du potentiel d'oxydoréduction dans ledit premier réacteur (RNK),
   xi. mesure de la concentration en $ClO_2$ trouvée dans ladite solution aqueuse dudit premier réacteur (RNK).

**7.** Procédé selon la revendication 6, **caractérisé en ce que** ladite installation comprend en outre une unité de réfrigération, où ladite solution aqueuse dudit premier réacteur (RNK) est réfrigérée pour former une solution aqueuse réfrigérée et ladite solution aqueuse réfrigérée est renvoyée au premier réacteur (RNK) et, de préférence, ladite solution aqueuse réfrigérée est renvoyée audit premier réacteur (RNK) au moins partiellement par le biais dudit réacteur basique (RBK) et/ou au moins partiellement par le biais dudit réacteur acide (RAK).

8. Procédé selon la revendication 7, **caractérisé en ce que** la mesure du chlore total de l'étape ix est effectuée dans ladite solution aqueuse réfrigérée.

9. Procédé selon l'une quelconque des revendications 6 à 8, **caractérisé en ce qu'**il comprend le réglage d'une deuxième unité de régulation de pH à une deuxième valeur de consigne de pH souhaitée, la mesure du pH de la solution mixte de ladite étape vi, et la régulation d'un ajout de ladite composition acide de ladite étape v en fonction de ladite mesure du pH de la solution mixte et de ladite deuxième valeur de consigne de pH.

10. Procédé selon l'une quelconque des revendications 6 à 9, **caractérisé en ce que** ledit procédé est réalisé à une température comprise entre 5 et 35 °C et, de préférence à une température comprise entre 15 et 23 °C.

11. Installation pour réaliser le procédé selon l'une quelconque des revendications 6 à 10, **caractérisée en ce qu'**elle comprend :

    - un dépôt de composé basique (6)
    - un dépôt de composé acide (8)
    - un premier réacteur (RNK) avec une entrée d'eau (10)
    - un réacteur acide (RAK) avec une entrée d'acide (12), une entrée de solution aqueuse de réacteur acide (14) et une sortie de réacteur acide (16), ladite entrée de solution aqueuse (14) étant en communication fluidique avec ledit premier réacteur (RNK) et ladite entrée d'acide (12) étant en communication fluidique avec ledit dépôt de composé acide (8), ladite sortie (16) étant en communication fluidique avec ledit premier réacteur (RNK),
    - un réacteur basique (RBK) avec une entrée basique (18), une entrée de solution aqueuse de réacteur basique (20) et une sortie de réacteur basique (22), ladite entrée de solution aqueuse de réacteur basique (20) étant en communication fluidique avec ledit premier réacteur (RNK) et ladite entrée basique (18) étant en communication fluidique avec ledit dépôt de composé basique (6), ladite sortie de réacteur basique (22) étant en communication fluidique, en aval des deux entrées (12, 14) dudit réacteur acide (RAK), avec ledit réacteur acide (RAK),
    - une pompe basique (BB) capable de pomper une solution basique dudit dépôt de composé basique (6) vers ledit réacteur basique (RBK),
    - une unité de régulation de chlore total (2) reliée à ladite pompe basique (BB) et capable de contrôler ladite pompe basique (BB),
    - une pompe acide (BA) capable de pomper une solution acide dudit dépôt de composé acide (8) vers ledit réacteur acide (RAK),
    - une unité de régulation de pH (4) reliée à ladite pompe acide (BA) et capable de contrôler ladite pompe acide (BA).

12. Installation selon la revendication 11, **caractérisée en ce qu'**elle comprend en outre une unité de réfrigération (26) dotée d'une entrée d'unité de réfrigération (28) en communication fluidique avec ledit premier réacteur (RNK) et d'une sortie d'unité de réfrigération (30) en communication fluidique avec ladite entrée de solution aqueuse de réacteur acide (14) et avec ladite entrée de solution aqueuse de réacteur basique (20) et, de préférence, ladite installation comprend en outre un capteur de température (32), de préférence relié à ladite unité de réfrigération (26).

13. Installation selon l'une quelconque des revendications 11 ou 12, **caractérisée en ce que** ledit réacteur acide (RAK) et ledit réacteur basique (RBK) sont au moins partiellement placés dans ledit premier réacteur (RNK).

14. Installation selon l'une quelconque des revendications 11 à 13, **caractérisée en ce qu'**elle comprend en outre un capteur de potentiel d'oxydoréduction (36).

15. Installation selon l'une quelconque des revendications 11 à 14, **caractérisée en ce qu'**elle comprend en outre un capteur de chlore gazeux (38) et, de préférence, elle comprend en outre : [a] une unité de ventilation (40) en communication fluidique avec ledit capteur de chlore gazeux (38) et avec un filtre à charbon actif et/ou [b] une douche d'eau (42) en liaison avec ledit capteur de chlore gazeux (38).

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5165910 A

**Non-patent literature cited in the description**

- *CHEMICAL ABSTRACTS*, 7732-18-5
- *CHEMICAL ABSTRACTS*, 7790-92-3
- *CHEMICAL ABSTRACTS*, 14380-61-1
- *CHEMICAL ABSTRACTS*, 7647-14-5
- *CHEMICAL ABSTRACTS*, 10049-04-4